# EUROPÄISCHE PATENTSCHRIFT

(11) **EP 1 566 105 B1**
(45) Veröffentlichungstag und Bekanntmachung des Hinweises auf die Patenterteilung: **02.06.2010**
(21) Anmeldenummer: 05002566.7
(22) Anmeldetag: 08.02.2005
(51) Int. Cl.: A23G 3/04, A23G 3/02, A23G 3/00

(54) **Verfahren und Vorrichtung zur kontinuierlichen Herstellung von Süsswarenmasse**
Process and device for the continuous production of confectionery mass
Procédé et dipositif pour la production continue de masse de confiserie

(30) Priorität: 12.02.2004 DE 102004006859
(43) Veröffentlichungstag der Anmeldung: 24.08.2005
(73) Patentinhaber: CHOCOTECH GmbH, 38855 Wernigerode (DE)
(72) Erfinder: Markwardt, Klaus, 30880 Laatzen (DE); Fleisch, Jens, 38855 Wernigerode (DE); Versic, Zuonimir, 30655 Hannover (DE)
(74) Vertreter: Rehberg Hüppe + Partner

(56) Entgegenhaltungen:
- EP-A- 0 054 960
- EP-A- 0 400 201
- EP-A- 1 486 125
- WO-A-98/17558
- WO-A-99/63837
- DE-A1- 2 026 931
- DE-A1-102004 006 860

## Beschreibung

Die Erfindung betrifft ein Verfahren zur kontinuierlichen Herstellung von Süßwarenmasse aus einer wässrigen Lösung von Einsatzstoffen, indem die Lösung gekocht, ausgedampft, unter Unterdruck gesetzt und ausgetragen wird, wobei der gekochten Süßwarenmasse Aromen, Farben und andere Ingredienzien hinzugefügt und mit der Masse vermischt werden. Es wird auch eine Vorrichtung zur kontinuierlichen Herstellung von Süßwarenmasse aus einer wässrigen Lösung von Einsatzstoffen aufgezeigt, mit einem Kocher für die wässrige Lösung der Einsatzstoffe, mindestens einem nachgeschalteten Raum zum Ausdampfen und/oder Vakuumieren der Masse, einer Austragseinrichtung und einem Mischer, sowie mindestens einer Einrichtung zur Zugabe von pulvrigen und/oder kristallinen Ingredienzien. Bei der vorliegenden Erfindung geht es um die Hinzufügung von solchen Ingredienzien, die in pulvriger und/oder kristalliner Form vorliegen, also z. B. von Säure, während der Herstellung einer Süßwarenmasse. Diese pulvrigen und/oder kristallinen Ingredienzien müssen in die Masse eingebracht und in der Masse möglichst gleichmäßig verteilt werden, damit sie am fertigen Produkt in gleicher Weise vorhanden sind. Es geht auch um die kontinuierliche Herstellung einer solchen Süßwarenmasse, bei der als Einsatzstoff Zucker oder Zuckerersatzstoff eingesetzt wird. Während Massen, die unter Verwendung von Zucker hergestellt werden, im Allgemeinen wenig luftaufnahmebereit und damit auch wenig anfällig gegen den Zutritt von Luftsauerstoff sind, ist dies bei Zuckerersatzstoffen sehr unterschiedlich. Es gibt Zuckerersatzstoffe, die sehr luftaufnahmebereit und daher auch sehr empfindlich gegen den Zutritt von Luftsauerstoff sind. Dies gilt insbesondere für im Mischer ungewollt eingearbeitete Luftblasen.

### STAND DER TECHNIK

Aus der EP 0 348 696 A2 ist ein Verfahren zur kontinuierlichen Herstellung von Hartbonbonmassen aus einer wässrigen Lösung von Einsatzstoffen bekannt. Die in Lösung gebrachten Einsatzstoffe werden gekocht, ausgedampft, unter Unterdruck gesetzt, ausgetragen, mit Ingredienzien gemischt und schließlich zu Bonbons geformt. Als Einsatzstoffe werden Zuckeraustauschstoffe verwendet. Der Kocher für die wässrige Lösung der Einsatzstoffe wird hier unter Unterdruck betrieben, der sich aus dem Ausdampfraum in den Kocher hinein fortsetzt. Die Zugabe üblicher Aromen und anderer Ingredienzien erfolgt aus Behältern mittels Dosierpumpen und angeschlossenen Rohrleitungen, die in das Gehäuse des der Austragseinrichtung nachgeschalteten Mischers einmünden. Die Ingredienzien werden damit in flüssiger Form eingebracht und im Mischer mit der Masse vermischt.

Aus der EP 0 054 960 A1 ist ein Verfahren und eine Vorrichtung zur kontinuierlichen Herstellung von Hartzucker-Masse oder dergleichen bekannt. Die Masse wird nach dem Kochen durch Behandlung unter Unterdruck von Wasser befreit. Die Vorrichtung weist einen dem Kocher nachgeschalteten, an eine Vakuumpumpe angeschlossenen Ausdampfraum und eine Misch- und Austragsvorrichtung für die weiter zu verarbeitende Zuckermasse auf. Es sind mehrere Vakuumierräume hintereinander vorgesehen. Die Austragseinrichtung und der Mischer sind zu einem Aggregat zusammengefasst. Über Anschlüsse am Gehäuse des Mischers werden Zusatzstoffe, wie Aromen, Farben, Säuren oder dergleichen in flüssiger oder kristalliner Form zugeführt und im Mischer gleichmäßig in der Masse verteilt.

Auch die DE 1 283 662 B beschäftigt sich mit einem Verfahren zum kontinuierlichen Herstellen von Fondantmasse mit einem Kocher zum Kochen der gelösten Einsatzstoffe, dem ein Vor- und Nachverdampfungsraum nachgeordnet sind. An diese Räume schließt sich ein Kühl- und Schlagwerk an, welches auch die Funktion des Austragens und Mischens übernehmen kann. Ingredienzien für diese Fondantmasse, wie beispielsweise Milch, Farben, Aromen usw. werden nach dem Schlagwerk über einen trichterförmigen Einlass einem Mischer zugegeben. Dies geschieht über den offenen Trichter, so dass auch Luft an die Masse herantreten kann und in die Masse eingearbeitet wird.

Es ist bekannt, Ingredienzien, die in pulvriger und/oder kristalliner Form vorliegen, über einen offenen Trichter in die Mischeinrichtung einzubringen. Solche Ingredienzien, insbesondere Säure, wird also nicht in Form einer flüssigen Lösung zugeführt, sondern als Pulver bzw.

Festkörper eingerieselt. Der dabei mögliche Zutritt von Luft ist für manche Einsatzstoff sehr nachteilig, für andere Einsatzstoffe weniger nachteilig. Luftaufnahmebereite Zuckerersatzstoffe sind hier besonders anfällig. Die Süßwarenmasse nimmt Luft in Form von Blasen auf. Diese Blasen können aus unterschiedlichen Gründen unerwünscht sein. Sie können einerseits bei der Weiterverarbeitung der Masse zu dem Produkt stören. Sie können auch das Aussehen sowie den Genuss des Produktes beeinträchtigen.

In der Regel werden Ingredienzien in Unterschiedlicher Form bzw. Gestalt zugeführt. Einige der Ingredienzien werden in Form gelöster Stoffe, also als pumpbare und durch Rohrleitungen zuzuführende Lösungen eingebracht. Andere Ingredienzien, wie oben bereits beschrieben, werden als pulvrige oder kristalline Festkörper eingerieselt. Durch den dazu erforderlichen Trichter und den Anschluss an die Umgebungsluft besteht die Möglichkeit, dass die in Form einer flüssigen Lösung eingebrachten Ingredienzien teilweise verdampfen und sich durch den offenen Stutzen verflüchtigen können.

Verschiedene Typen von Ingredienzien, insbesondere Säuretypen, neigen zu Verklebungen an dem offenen Stutzen des Mischers. Diese Stoffe sind teilweise hygroskopisch und neigen zum Ankleben an dem Trichter, so dass sich hier letztendlich Ansammlungen dieser Stoffe ergeben können, die bis zu einem Verschluss des Trichters führen können. Dies beeinträchtigt die kontinuierliche Herstellung.

Eine Vorrichtung und ein Verfahren zur pneumatischen Förderung pulverförmiger Stoffe ist weiterhin aus WO 98/17558 bekannt.

Da die Ingredienzien im Bereich des Mischers zugegeben werden, muss der Mischer mehr fördern als die Austragseinrichtung, damit der trichterförmige Stutzen am Mischer frei wird und frei bleibt, um beispielsweise kristalline Säure ordnungsgemäß einrieseln zu lassen. Dies bedeutet wiederum, dass in der Austragseinrichtung und dem nachfolgend angeordneten Mischer ein Druckaufbau erfolgen kann, weil über dem Trichter die offene Verbindung zur Atmosphäre besteht. Dies führt wiederum dazu, dass der Mischer mit einer Mindestdrehzahl betrieben werden muss, um die Süßwarenmasse hinwegzufördern und den Trichter freizuhalten. Diese einzuhaltende Mindestdrehzahl erschwert die schonende Behandlung der Süßwarenmasse im Mischer, insbesondere für empfindliche Massen.

Wenn im Mischer mit offenem Trichter ein Druckaufbau erwünscht ist, erfordert dies die Anordnung eines Druckhalteventils am Ausgang eines Mischers. Der gesamte Druckaufbau muss im Mischer erzeugt werden. Das ist beispielsweise dann der Fall, wenn gasförmige Stoffe, insbesondere Luft, in dem Mischer zugegeben wird und der Mischer damit auch Aufschlagfunktion erhält.

### AUFGABE DER ERFINDUNG

Der Erfindung liegt die Aufgabe zugrunde, ein Verfahren und eine Vorrichtung zur kontinuierlichen Herstellung von Süßwarenmasse aufzuzeigen, bei dem pulvrige und/oder kristalline Ingredienzien, insbesondere Säuren, in die Süßwarenmasse ohne Luftzutritt im Mischer eingebracht und gleichmäßig in der Masse vermischt werden können.

### LÖSUNG

Die Aufgabe der Erfindung wird erfindungsgemäß mit den Merkmalen der unabhängigen Patentansprüche 1 und 5 gelöst.

Vorteilhafte Ausgestaltungen werden in den Unteransprüchen beschrieben.

### BESCHREIBUNG DER ERFINDUNG

Bei dem Verfahren zur kontinuierlichen Herstellung von Süßwarenmasse werden pulvrige und/oder kristalline Ingredienzien unter Anwendung von Unterdruck in die Masse eingesaugt. Dies gilt insbesondere für die Zugabe von Säure in Festkörperform. Hier übernimmt der Unterdruck Förderfunktion und verhindert ein Anbacken oder Festsetzen dieser Ingredienzien an Bestandteilen der Zufuhreinrichtung. An sich können bekannte dosierend arbeitende Zufuhreinrichtungen, wie sie auch beim Einrieseln solcher Ingredienzien eingesetzt werden, auch weiterhin benutzt werden. Die Eintragung dieser Ingredienzien unter Anwendung von Unterdruck in einen Raum, der unter Unterdruck steht, erbringt gleichzeitig den Vorteil, dass die durch die offene Verbindung zur Atmosphäre mit eingeschleppte oder eingesaugte Luft von der Unterdruckquelle abgeführt wird, während die eingebrachten Ingredienzien in der Masse verbleiben. Die Hinzufügung dieser Ingredienzien kann vergleichsweise früher im Herstellungsprozess erfolgen. Für die Zugabe kann entweder ein ohnehin bereits vorhandener Raum genutzt werden, der unter Unterdruck steht und in dem beispielsweise ausgedampft und/oder gekühlt wird. Es ist auch möglich, einen zusätzlichen Unterdruckraum zu schaffen, um die Zugabe dieser pulvrigen und/oder kristallinen Ingredienzien zu verwirken. All dies geschieht in der Regel vor der Austragseinrichtung und dem nachfolgenden Mischer. Damit wird einerseits der Unterdruckraum dazu genutzt, um die durch die offene Verbindung eingeschleppte Luft zu entfernen und andererseits die Möglichkeit zu schaffen, in nachfolgenden Behandlungsschritten, beispielsweise in der Austragseinrichtung und im Mischer geschlossen arbeiten zu können, also einen Zutritt von Luft dort zu verhindern. Dies ermöglicht die Herstellung eines blasenfreien Produktes, es sei denn, eine Lufteinarbeitung wird gewünscht und das Produkt soll aufgeschlagen werden. In diesem Falle ist eine gezielte kontrollierte Luftzuführung in die geschlossene Austragseinrichtung und/oder den nachgeschalteten Mischer möglich, so dass der Belüftungsgrad der Masse besser und genauer eingehalten werden kann als bei Verwendung eines den Luftanschluss ermöglichenden Trichters. Wenn ein unter Unterdruck stehender Vakuum- und/oder Ausdampfraum zur Zugabe der pulvrigen und/oder kristallinen Ingredienzien genutzt wird, wird die Unterdruckquelle etwas größer dimensionier und/oder so eingestellt, dass trotz der offenen Verbindung zur Umgebung das erforderliche Vakuum in dem Raum aufrechterhalten wird.

Die Vorrichtung, die beispielsweise zur Durchführung des Verfahrens eingesetzt werden kann, zeichnet sich erfindungsgemäß dadurch aus, dass die Einrichtung zur Zugabe von pulvrigen und/oder kristallinen Ingredienzien an einen unter Unterdruck stehenden Raum angeschlossen ist. Dabei sollten insbesondere die Austragseinrichtung und der Mischer geschlossen ausgebildet sein. Es versteht sich, dass die Austragseinrichtung einerseits und auch der Mischer jeweils einen Eingang und einen Ausgang zum Hindurchführen der Masse aufweisen müssen. Die geschlossene Ausbildung bezieht sich auf die Vermeidung einer weiteren Öffnung, wie sie bei einem offenen Trichter im Stand der Technik vorhanden ist. Durch die Zugabe der Ingredienzien stromauf der Austragseinrichtung wird eine besonders gleichmäßige Verteilung der Ingredienzien in der Masse erreicht, da auch die Austragseinrichtung bereits zur Einarbeitung und Verteilung der Ingredienzien genutzt wird. Es versteht sich, dass in der Regel unterschiedliche Ingredienzien hinzugefügt werden, von denen mindestens ein Stoff pulvrig und/oder kristallin ausgebildet ist. In der Regel werden auch flüssige Ingredienzien in Lösung zugeführt. Dies kann auf gekannte Art und Weise mit Hilfe von Dosierpumpen und geschlossenen Rohrleitungen erfolgen, wobei der Zutritt des Luftsauerstoffes ohnehin ausgeschlossen ist.

Besonders sinnvoll ist es, wenn die Einrichtung zur Zugabe von pulvrigen und/oder kristallinen Ingredienzien an einen unterhalb eines Ausdampfraumes angeordneten Vakuumraum angeschlossen ist, wobei der Vakuumraum an eine Unterdruckquelle angeschlossen ist, die das erforderliche Vakuum trotz eines offenen Stutzens an der Einrichtung zur Zugabe von pulvrigen und/oder kristallinen Ingredienzien aufrecht erhält. Damit wird eine Stelle im Herstellungsprozess aufgezeigt, die zu einer früheren Einbringung dieser Ingredienzien währen der Herstellung führt. So ist es beispielsweise möglich, die Zufuhr unterhalb eines Massespiegels in dem betreffenden Vakuumraum zu bewirken, so dass mit eingeschleppte Luft besonders wirksam entfernt wird und die Ingredienzien direkt in die Masse eingebracht und in ihr gut verteilt werden.

Durch die Vermeidung eines offenen Trichters am Mischer besteht die Möglichkeit, am Mischer ausgangsseitig ein Druckhalteventil anzuordnen, so dass sich in der Austragseinrichtung und dem unmittelbar nachgeschalteten Mischer ein Überdruck aufbauen kann. Der Mischer ist somit mit Süßwarenmasse vollständig gefüllt und kann vorteilhaft mit geringer Drehzahl betrieben werden, woraus eine schonende Behandlung der Masse resultiert.

In einer bevorzugten Ausführungsform sind dem Kocher ein Ausdampfraum und ein Vakuumraum nachgeschaltet. Am unteren Ende des Vakuumraums ist die Austragseinrichtung angeordnet, für die es verschiedene Bauarten gibt. An die Austragseinrichtung schließt sich der Mischer an. Die Einrichtung zur Zugabe von pulvrigen und/oder kristallinen Ingredienzien kann ein Zufuhrrohr aufweisen, welches in den Vakuumraum einragt und nahe dem Übergang von dem Vakuumraum zu der Austragseinrichtung endet. Damit kann die Zugabe gleichsam am Ausgang des Vakuumraums bzw. am Eingang in die Austragseinrichtung erfolgen, so dass eine unmittelbare Einarbeitung der Ingredienzien sichergestellt ist. Es ist aber auch möglich, dass die Einrichtung zur Zugabe der Ingredienzien an den Ausdampfraum angeschlossen ist, also gleichsam noch früher im Herstellungsprozess erfolgt. Schließlich ist es auch möglich, die Ausdampfung und die Behandlung mit Unterdruck in einem gemeinsamen Ausdampf- und Vakuumraum durchzuführen.

Durch die Vermeidung eines offenen Trichters am Mischer und die Einführung von pulvrigen und/oder kristallinen Ingredienzien in einem unter Unterdruck stehenden Raum ergeben sich eine Reihe von Vorteilen. Das Nachfolgende Austrags- und Mischsystem kann geschlossen ausgeführt werden. Es wird keine Luft unbeabsichtigt in die Masse eingeführt. Es verringern sich die Verluste an Ingredienzien in Folgeverdampfungen und/oder Austritt aus dem trichterförmigen Stutzen. Die Förderung der Masse im Bereich der Austragseinrichtung und des Mischers kann durch vorgeschaltete Einrichtungen sichergestellt oder unterstützt werden, wodurch die Mischeinrichtung mit geringerer Drehzahl und damit schonend betrieben werden kann. Die Austragseinrichtung mit dem nachgeschalteten Mischer kann komplett mit Überdruck betrieben werden, wenn am Ausgang des Mischers ein Druckhalteventil installiert wird. Diese Ausführungsform wird bevorzugt dann angewendet, wenn gasförmige Ingredienzien einzumischen sind.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematische Darstellung der Aggregate einer Vorrichtung zur kontinuierlichen Herstellung von Süßwarenmasse.
- **Fig. 2**: zeigt ein Detail aus der Vorrichtung gemäß Fig. 1 in abgewandelter Ausführungsform und
- **Fig. 3**: verdeutlicht schließlich eine dritte Ausführungsform der Vorrichtung im Bereich einer Einrichtung zur Zugabe von pulvrigen und/oder kristallinen Ingredienzien.

### FIGURENBESCHREIBUNG

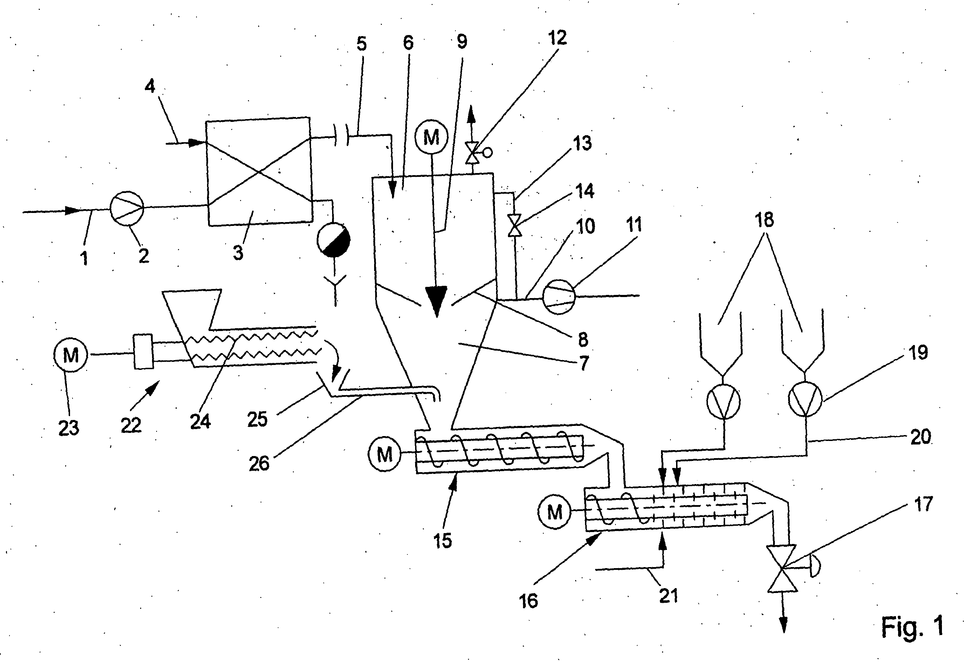

In Fig. 1 sind die wesentlichen für das Verständnis der Erfindung notwendigen Aggregate schematisch dargestellt. Die in Wasser gelösten Einsatzstoffe, also beispielsweise Zucker, Zuckeraustauschstoff, Glukosesirup und dergleichen gelangen in gelöster Form von einem nicht dargestellten Wiege- und Dosieraggregat über eine Leitung 1 mit einer Pumpe 2 zu einem Kocher 3, der als Schlangenkocher ausgebildet sein kann. Der Kocher wird beispielsweise mit Dampf über eine Leitung 4 beheizt. Die Wärme wird durch Kondensation des Dampfes an der Schlange des Kochers 3 auf die Lösung übertragen. Dem Kocher 3 ist über eine Verbindungsleitung 5 ein Ausdampfraum 6 nachgeschaltet, in welchem die Lösung bzw. die Masse ausdampfen kann. Im Ausdampfraum fällt das verdampfte Wasser in Dampfform als Brüden an. Dem Ausdampfraum 6 ist ein Vakuumraum 7 nachgeschaltet. Der Ausdampfraum 6 und der Vakuumraum 7 sind in einem gemeinsamen Behälter mit vertikaler Achse zusammengefasst. Ein Zwischenboden 8 mit einem motorisch angetriebenen Nadelventil 9 ermöglicht die Überführung der Masse von dem Ausdampfraum 6 in den Vakuumraum 7. Der Vakuumraum 7 ist über eine Leitung 10 an eine Unterdruckquelle 11 angeschlossen, die als Vakuumpumpe ausgebildet sein kann und den erforderlichen Unterdruck in dem Vakuumraum 7 bereitstellt. Der Ausdampfraum 6 kann mit einem Brüdenventil 12 zur Abfuhr der Brüden ausgestattet sein. Außerdem kann der Ausdampfraum 6 über eine Leitung 13 an die Leitung 10 und damit an die Unterdruckquelle 11 angeschlossen sein. In der Leitung 13 ist ein Absperrventil 14 vorgesehen. Es versteht sich, dass bei Benutzung der Abfuhr der Brüden über das Brüdenventil 12 das Absperrventil 14 geschlossen ist.

Am unteren Ende des Vakuumraums 7 ist eine Austragseinrichtung 15 vorgesehen, die im Wesentlichen aus einem Gehäuse und einer motorisch angetriebenen Förderschnecke besteht. Das Gehäuse ist dichtend an den Vakuumraum 7 angeschlossen, so dass die Masse an dieser Stelle in die Austragseinrichtung 15 übertreten kann. Die Austragseinrichtung 15 führt unmittelbar zu einem Mischer 16, der insbesondere als motorisch angetriebene Förderschnecke in einem Gehäuse ausgebildet ist. Austragseinrichtung 15 und Mischer 16 können auch in einem gemeinsamen Gehäuse unmittelbar nacheinander angeordnet oder auch baulich miteinander vereinigt sein. Die Welle der Förderschnecke kann mit Misch-, Förder- und Schlagelementen versehen sein, so wie es die jeweilige Masse erfordert. Am Ausgang des Mischers 16 ist ein Druckhalteventil 17 angeordnet. Flüssige Ingredienzien, beispielsweise Farben, Aromen und dergleichen werden aus entsprechenden Vorratsbehältern 18 über Dosierpumpen 19 und Rohrleitungen 20 dem Mischer 16 bzw. der in ihm befindlichen Masse zugeführt. Die Rohrleitungen 20 sind an das Gehäuse des Mischers 16 angeschlossen, so dass an dieser Stelle der Übertritt und Zutritt von Umgebungsluft verhindert wird. Falls ein gasförmiger Stoff, beispielsweise Luft, Stickstoff oder dergleichen der Masse zugeführt werden soll, geschieht dies über eine Zuleitung 21, die an den Mischer 16 angeschlossen ist.

Es ist eine Einrichtung 22 zur Zugabe von pulvrigen und/oder kristallinen Ingredienzien vorgesehen. Die Einrichtung 22 kann über einen Motor 23 angetriebene Dosierschnecken 24 aufweisen, mit deren Hilfe der pulvrige und/oder kristalline Stoff im freien Fall in einen Trichter 25 abgegeben wird, an den ein Zufuhrrohr 26 anschließt, welches die Wandung des Behälters des Vakuumraums 7 durchsetzt und im inneren des Vakuumraums endet. Das Zufuhrrohr endet insbesondere im unteren Bereich des Vakuumraums 7 nahe dem Eingang in die Austragseinrichtung 15. Am Trichter 25 und/oder an einer anderen Stelle der Einrichtung 22 besteht Verbindung zur Umgebungsluft, so dass über den Unterdruck im Vakuumraum 7 nicht nur die pulvrigen und/oder kristallinen Ingredienzien eingesaugt werden, sondern auch Umgebungsluft. Diese Umgebungsluft ermöglicht einerseits die ungehinderte Förderung. Sie wirkt sich nicht nachteilig aus, da der Unterdruck im Vakuumraum 7 mit Hilfe der Unterdruckquelle 11 so eingestellt ist, dass auch die über die Einrichtung 22 mit eingesaugte Luft abgeführt wird, so dass diese nicht in der Masse verbleibt. In der Masse im Bereich des Vakuumraums 7 befindliche Luftblasen werden durch den Unterdruck entfernt, so dass eine blasenfreie Masse über die Austragseinrichtung 15 und den Mischer 16 letztlich ausgetragen und einer Weiterverarbeitung zugeführt wird. Es ist erkennbar, dass die Gehäuse der Austragseinrichtung 15 und des Mischers 16 geschlossen ausgebildet sind, d.h. keinen unmittelbaren Anschluss an die Umgebungsluft aufweisen. Dies ist in mehrfacher Hinsicht vorteilhaft. Die flüssig eingebrachten Ingredienzien können also weder verdampfen noch sich verflüchtigen. Sie verbleiben eingearbeitet in der Masse und in dem daraus hergestellten Produkt.

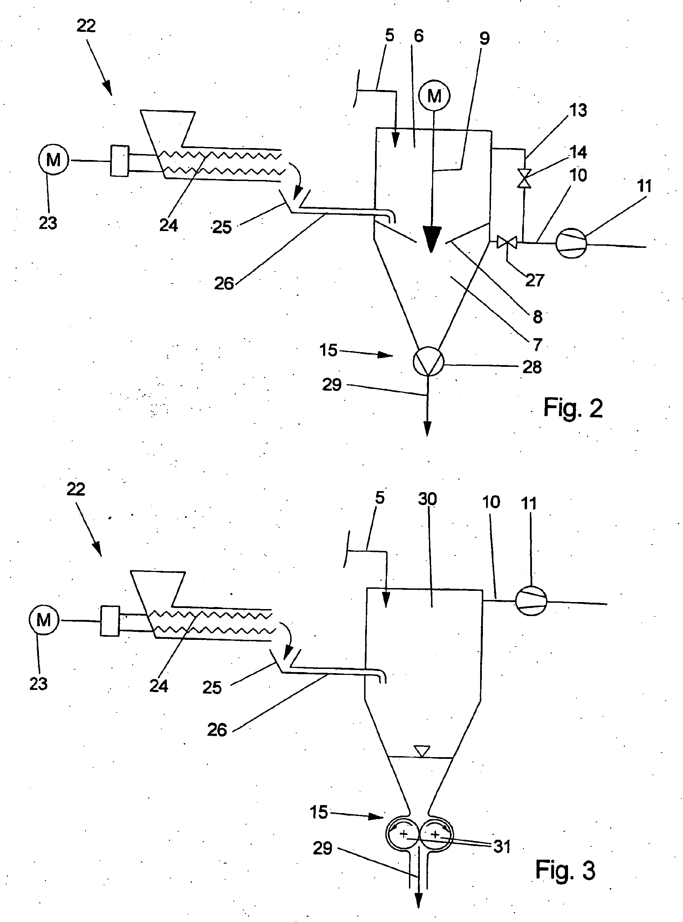

Die in **Fig. 2** dargestellte Ausführungsform schließt in weiten Bereichen an die Ausführungsform der Fig. 1 an. Es sind nur die abweichenden Elemente dargestellt. Der Ausdampfraum 6 besitzt keinen Brüdenauslass, sondern ist über die Leitung 13 an die Unterdruckquelle 11 angeschlossen. Im Ausdampfraum 6 kann ein Druck von 0,1 bar absolut eingestellt werden, während im Vakuumraum 7 ein Druck von etwa 0,05 bar absolut erzeugt wird. Hierzu dienen die Ventile 14 und 27. Die Einrichtung 22 ist hier an den Ausdampfraum 6 angeschlossen, in welchem ein entsprechender Unterdruck herrscht. Als Austragseinrichtung 15 ist hier am unteren Ende des Behälters mit dem Ausdampfraum 6 und dem Vakuumraum 7 eine Pumpe 28 angeschlossen. Von dort führt eine Leitung 29 weiter zum Mischer 16 (nicht dargestellt). Auch hier werden die flüssigen Ingredienzien im Bereich des Mischers 16 zugegeben, wie dies anhand des Ausführungsbeispieles der Fig. 1 verdeutlicht wurde. Aus der Zusammenschau der Fig. 1 und 2 ist erkennbar, dass auch mehrere Einrichtungen 22 vorgesehen sein können, die an einen gemeinsamen oder an unterschiedliche unter Unterdruck stehende Räume angeschlossen sein können, beispielsweise an den Ausdampfraum 6 und/oder den Unterdruckraum 7.

Bei dem Ausführungsbeispiel der **Fig. 3** ist der Ausdampfraum 6 und der Vakuumraum 7 zu einem gemeinsamen Ausdampf- und Vakuumraum 30 zusammengefasst, der an die Vakuumquelle 11 angeschlossen ist. Unten an diesem gemeinsamen Ausdampf- und Vakuumraum 30 sitzt die Austragseinrichtung 15, die hier als Vorrichtung mit zwei Walzen 31 ausgebildet ist. Von dort führt die Leitung 29 zu dem Mischer 16.

### BEZUGSZEICHENLISTE

- 1: Leitung
- 2: Pumpe
- 3: Kocher
- 4: Leitung
- 5: Verbindungsleitung
- 6: Ausdampfraum
- 7: Vakuumraum
- 8: Zwischenboden
- 9: Nadelventil
- 10: Leitung
- 11: Unterdruckquelle
- 12: Brüdenventil
- 13: Leitung
- 14: Absperrventil
- 15: Austragseinrichtung
- 16: Mischer
- 17: Druckhalteventil
- 18: Vorratsbehälter
- 19: Dosierpumpe
- 20: Rohrleitung
- 21: Zuleitung
- 22: Einrichtung
- 23: Motor
- 24: Dosierschnecke
- 25: Trichter
- 26: Zufuhrrohr
- 27: Ventil
- 28: Pumpe
- 29: Leitung
- 30: Ausdampf- und Vakuumraum
- 31: Walze

## Patentansprüche

1. Verfahren zur kontinuierlichen Herstellung von Süßwarenmasse aus einer wässrigen Lösung von Einsatzstoffen, indem die Lösung gekocht, ausgedampft, unter Unterdruck gesetzt und ausgetragen wird, wobei der gekochten Süßwarenmasse Aromen, Farben und andere Ingredienzien hinzugefügt und mit der Masse vermischt werden, **dadurch gekennzeichnet, dass** pulvrige und/oder kristalline Ingredienzien unter Anwendung von Unterdruck in die Masse eingesaugt werden.

2. Verfahren nach Anspruch 1, **dadurch gekennzeichnet, dass** die pulvrigen und/oder kristallinen Ingredienzien vor dem Austragen der Masse in einen unter Unterdruck stehenden Vakuum- und/oder Ausdampfraum (6, 7; 30) eingesaugt werden.

3. Verfahren nach Anspruch 1 oder 2, **dadurch gekennzeichnet, dass** das Austragen und Mischen der Masse mit den Ingredienzien in einem geschlossenen Raum erfolgt.

4. Verfahren nach mindestens einem der Ansprüche 1 bis 3, **dadurch gekennzeichnet, dass** der Unterdruck in dem Vakuum- und/oder Ausdampfraum (6, 7; 30) so erhöht wird, dass die mit den pulvrigen und/oder kristallinen Ingredienzien eingesaugte Luft mit abgeführt wird.

5. Vorrichtung zur kontinuierlichen Herstellung von Süßwarenmasse aus einer wässrigen Lösung von Einsatzstoffen, insbesondere nach mindestens einem der Ansprüche 1 bis 4, mit einem Kocher (3) für die wässrige Lösung der Einsatzstoffe, mindestens einem nachgeschalteten Raum (6, 7) zum Ausdampfen und/oder Vakuumieren der Masse, einer Austragseinrichtung (15) und einem Mischer (16), sowie mindestens einer Einrichtung (22) zur Zugabe von pulvrigen und/oder kristallinen Ingredienzien, **dadurch gekennzeichnet, dass** die Einrichtung (22) zur Zugabe von pulvrigen und/oder kristallinen Ingredienzien an einen unter Unterdruck stehenden Raum (6, 7; 30) angeschlossen ist.

6. Vorrichtung nach Anspruch 5, **dadurch gekennzeichnet, dass** die Austragseinrichtung (15) und der Mischer (16) geschlossen ausgebildet sind.

7. Vorrichtung nach Anspruch 5 oder 6, **dadurch gekennzeichnet, dass** die Einrichtung (22) zur Zugabe von pulvrigen und/oder kristallinen Ingredienzien an einen unterhalb eines Ausdampfraumes (6) angeordneten Vakuumraum (7) angeschlossen ist und dass der Vakuumraum (7) an eine Unterdruckquelle (11) angeschlossen ist, die das erforderliche Vakuum trotz eines offenen Stutzens an der Einrichtung (22) zur Zugabe von pulvrigen und/oder kristallinen Ingredienzien aufrechterhält.

8. Vorrichtung nach mindestens einem der Ansprüche 5 bis 7, **dadurch gekennzeichnet, dass** der Mischer (16) ausgangsseitig ein Druckhalteventil (17) aufweist, so dass in der Austragseinrichtung (15) und dem nachgeschalteten Mischer (16) ein Überdruck entsteht.

9. Vorrichtung nach mindestens einem der Ansprüche 5 bis 8, **dadurch gekennzeichnet, dass** dem Kocher (3) ein Ausdampfraum (6) und ein Vakuumraum (7) nachgeschaltet sind, am unteren Ende des Vakuumraums (7) die Austragseinrichtung (15) angeordnet ist, an die sich der Mischer (16) anschließt, und dass die Einrichtung (22) zur Zugabe von pulvrigen und/oder kristallinen Ingredienzien ein Zufuhrrohr (26) aufweist, welches in den Vakuumraum (7) einragt und nahe dem Übergang von dem Vakuumraum (7) zu der Austragseinrichtung (15) endet.

10. Vorrichtung nach mindestens einem der Ansprüche 5 bis 8, **dadurch gekennzeichnet, dass** dem Kocher (3) ein Ausdampfraum (6) und ein Vakuumraum (7) nachgeschaltet sind, am unteren Ende des Vakuumraums (7) die Austragseinrichtung (15) angeordnet ist, an die sich der Mischer (16) anschließt, dass auch der Ausdampfraum (6) an eine Unterdruckquelle (11) angeschlossen ist, und dass die Einrichtung (22) zur Zugabe von pulvrigen und/oder kristallinen Ingredienzien an den Ausdampfraum (6) angeschlossen ist.

11. Vorrichtung nach mindestens einem der Ansprüche 5 bis 8, **dadurch gekennzeichnet, dass** dem Kocher (3) ein gemeinsamer Ausdampf- und Vakuumraum (30) nachgeschaltet ist, am unteren Ende dieses Ausdampf- und Vakuumraums (30) die Austragseinrichtung (15) angeordnet ist, und dass die Einrichtung (22) zur Zugabe von pulvrigen und/oder kristallinen Ingredienzien ein Zufuhrrohr (26) aufweist, welches in den gemeinsamen Ausdampf- und Vakuumraum (30) einragt.

## Claims

1. A method of continuously producing a confectionery mass from an aqueous solution of ingredients, wherein
the solution is boiled, evaporated, put under the Influence of negative pressure and discharged,
flavours, colours and other ingredients are introduced into the cooked confectionery mass and mixed with the mass, **characterised in that**
ingredients in the form of powders and/or crystals are sucked Into the mass under the Influence of negative pressure.

2. The method according to claim 1, **characterised in that** the ingredients in the form of powders and/or crystals are sucked into a vacuum chamber and/or an evaporating chamber (6, 7; 30) being under the influence of negative pressure before the mass is discharged,

3. The method according to claim 1 or 2, **characterised in that** discharging the mass and mixing the mass takes place in a closed chamber.

4. The method according to at least one of claims 1 to 3, **characterised in that** the value of the negative pressure in the vacuum chamber and/or the evaporating chamber (6, 7; 30) Is increased such that the air being sucked In with the ingredients in the form of powders and/or crystals is also removed.

5. An apparatus for continuously producing a confectionery mass from an aqueous solution of ingredients, especially according to at least one of claims 1 to 4, including
a boiling apparatus (3) for the aqueous solution of ingredients,
at least one chamber (6, 7) being located downstream of the boiling apparatus (3), the chamber (6, 7) serving to evaporate and/or vacuumise the mass,
a discharging apparatus (15) and a mixing apparatus (16) as well as at least one unit (22) for introducing ingredients in the form of powders and/or crystals, **characterised in that**
the unit (22) for introducing ingredients in the form of powders and/or crystals Is connected to a chamber (6, 7; 30) being under the influence of negative pressure.

6. The apparatus according to claim 5, **characterised in that** the discharging apparatus (15) and the mixing apparatus (16) are designed to be closed.

7. The apparatus according to claim 5 or 6, **characterised in that**
the unit (22) for introducing ingredients in the form of powders and/or crystals is connected to a vacuum chamber (7) being arranged below the evaporating chamber (6), and
the vacuum chamber (7) is connected to a source of negative pressure (11) supplying the required vacuum despite an open trim being located at the unit (22) for introducing ingredients in the form of powders and/or crystals.

8. The apparatus according to at least one of claim 5 to 7, **characterised in that** the mixing apparatus (16) at its exit includes a pressure maintaining valve (17) such that there Is positive pressure in the discharging apparatus (15) and in the mixing apparatus (16) located downstream thereof.

9. The apparatus according to at least one of claim 5 to 8, **characterised in that**
an evaporating chamber (6) and a vacuum chamber (7) are located downstream of the boiling apparatus (3),
the discharging apparatus (15) is located at the lower end of the vacuum chamber (7), the mixing apparatus (16) being located next to the discharging apparatus (15), and
the unit (22) for introducing ingredients In the form of powders and/or crystals includes an introducing tube (26) protruding into the vacuum chamber (7) and ending close to the transition region between the vacuum chamber (7) and the discharging apparatus (15).

10. The apparatus according to at least one of claim 5 to 8, **characterised in that**
an evaporating chamber (6) and a vacuum chamber (7) are located downstream of the boiling apparatus (3),
the discharging apparatus (15) is located at the lower end of the vacuum chamber (7), the mixing apparatus (16) being located next to the discharging apparatus (15),
the evaporating chamber (6) is also connected to a source of negative pressure (11), and
the unit (22) for Introducing ingredients in the form of powders and/or crystals is connected to the evaporating chamber (6).

11. The apparatus according to at least one of claim 5 to 8, **characterised in that**
a common evaporating and vacuum chamber (30) is located downstream of the boiling apparatus (3),
the discharging apparatus (15) is arranged at the lower end of the evaporating and vacuum chamber (30), and
the unit (22) for introducing ingredients in the form of powders and/or crystals includes an introducing tube (26) protruding into the common evaporating and vacuum chamber (30).

## Revendications

1. Procédé de fabrication continue d'une pâte de confiserie à partir d'une solution aqueuse de matières premières, dans lequel la solution est cuite, évaporée, mise sous dépression et évacuée, des arômes, couleurs et autres ingrédients étant ajoutés à la pâte de confiserie cuite et étant mélangés à la pâte, **caractérisé en ce que** des ingrédients en poudre et/ou en cristaux sont absorbés dans la pâte sous l'effet de l'application d'une dépression.

2. Procédé selon la revendication 1, **caractérisé en ce que** les ingrédients en poudre et/ou en cristaux sont absorbés avant le déversement de la pâte dans un compartiment sous vide et/ou compartiment de vaporisation (6, 7 ; 30), dans lequel règne une dépression.

3. Procédé selon la revendication 1 ou 2, **caractérisé en ce que** le déversement et le malaxage de la pâte avec les ingrédients sont effectués dans un espace fermé.

4. Procédé selon l'une quelconque des revendications 1 à 3, **caractérisé en ce que** la dépression dans le compartiment sous vide et/ou compartiment de vaporisation (6, 7 ; 30) est augmentée de telle sorte que l'air absorbé avec les ingrédients en poudre et/ou en cristaux est évacué en même temps.

5. Dispositif de fabrication continue de pâte de confiserie à partir d'une solution aqueuse de matières premières, en particulier selon au moins l'une des revendications 1 à 4, comportant un cuiseur (3) pour la solution aqueuse de matières premières, au moins un compartiment (6, 7) monté en aval pour la vaporisation ou l'élimination de l'air de la pâte, un dispositif de déversement (15) et un malaxeur (16), ainsi qu'au moins un dispositif (22) pour l'addition d'ingrédients en poudre et/au en cristaux, **caractérisé en ce que** le dispositif (22) pour l'addition d'ingrédients en poudre et/ou en cristaux est raccordé à un compartiment (6, 7 ; 30), dans lequel règne une dépression.

6. Dispositif selon la revendication 5, **caractérisé en ce que** le dispositif de déversement (15) et le malaxeur (16) sont réalisés fermés.

7. Dispositif selon la revendication 5 ou 6, **caractérisé en ce que** le dispositif (22) pour l'addition d'ingrédients en poudre et/ou en cristaux est raccordé à un compartiment sous vide (7), disposé en dessous d'un compartiment de vaporisation (6), et **en ce que** le compartiment sous vide (7) est raccordé à une source de dépression (11), qui maintient le vide nécessaire malgré une tubulure ouverte sur le dispositif (22) pour l'addition d'ingrédients en poudre et/ou en cristaux.

8. Dispositif selon au moins l'une des revendications 5 à 7, **caractérisé en ce que** le malaxeur (16) comporte sur le côté sortie une vanne de maintien de la pression (17), de telle sorte qu'il se produit une surpression dans le dispositif de déversement (15) et le malaxeur (16) monté en aval.

9. Dispositif selon au moins l'une des revendications 5 à 8, **caractérisé en ce qu'**un compartiment de vaporisation (6) et un compartiment sous vide (7) sont montés en aval du cuiseur (3), le dispositif de déversement (15), auquel est raccordé le malaxeur (16), est monté au niveau de l'extrémité inférieure du compartiment sous vide (7), et **en ce que** le dispositif (22) pour l'addition d'ingrédients en poudre et/ou en cristaux comporte un tube d'acheminement (26), qui s'engage dans le compartiment sous vide (7) et qui se termine à proximité de la transition entre le compartiment sous vide (7) et le dispositif de déversement (15).

10. Dispositif selon au moins l'une des revendications 5 à 8, **caractérisé en ce qu'**un compartiment de vaporisation (6) et un compartiment sous vide (7) sont montés en aval du cuiseur (3), le dispositif de déversement (15), auquel est raccordé le malaxeur (16), est monté au niveau de l'extrémité inférieure du compartiment sous vide (7), **en ce que** le compartiment de vaporisation (6) est également raccordé à une source de dépression (11), et **en ce que** le dispositif (22) pour l'addition d'ingrédients en poudre et/ou en cristaux est raccordé au compartiment de vaporisation (6).

11. Dispositif selon au moins l'une des revendications 5 à 8, **caractérisé en ce qu'**un compartiment de vaporisation et sous vide (30) commun est monté en aval du cuiseur (3), le dispositif de déversement (15) est monté au niveau de l'extrémité inférieure de ce compartiment de vaporisation et sous vide (30), et **en ce que** le dispositif (22) pour l'addition d'ingrédients en poudre et/ou en cristaux comporte un tube d'acheminement (26), qui s'engage dans le compartiment de vaporisation et sous vide (30).
